Europäisches Patentamt

European Patent Office

Office européen des brevets

(11) Numéro de publication : **0 434 504 A1**

## (12) DEMANDE DE BREVET EUROPEEN

(21) Numéro de dépôt : **90403544.1**

(22) Date de dépôt : **12.12.90**

(51) Int. Cl.⁵ : **G01D 5/26, G01L 1/14**

(30) Priorité : **19.12.89 FR 8916790**

(43) Date de publication de la demande :
**26.06.91 Bulletin 91/26**

(84) Etats contractants désignés :
**DE GB**

(71) Demandeur : **THOMSON-CSF**
**51, Esplanade du Général de Gaulle**
**F-92800 Puteaux (FR)**

(72) Inventeur : **Turpin, Marc**
**THOMSON-CSF SCPI Cédex 67**
**F-92045 Paris la Défense (FR)**
Inventeur : **Vignolle, Jean-Michel**
**THOMSON-CSF SCPI Cédex 67**
**F-92045 Paris la Défense (FR)**
Inventeur : **Charasse, Marie-Noelle**
**THOMSON-CSF SCPI Cédex 67**
**F-92045 Paris la Défense (FR)**
Inventeur : **Le Pesant, Jean-Pierre**
**THOMSON-CSF SCPI Cédex 67**
**F-92045 Paris la Défense (FR)**

(74) Mandataire : **Guérin, Michel et al**
**THOMSON-CSF SCPI**
**F-92045 PARIS LA DEFENSE CEDEX 67 (FR)**

(54) **Capteur à fibre optique.**

㊿ Le capteur selon l'invention utilise l'effet de variation de la biréfringence dans une fibre optique biréfringente en fonction de contraintes et de la température.

Il comporte une source à spectre large (10), polarisée linéairement, couplée à une fibre optique monomode à conservation de polarisation (11), selon l'un de ses axes neutres, des dispositifs (M1 à Mn) susceptibles d'induire des points de couplage étant répartis le long de cette fibre. Un polariseur (12) à 45° des axes neutres de la fibre est placé en sortie de cette fibre capteur. L'analyse du rayonnement de sortie est effectuée par spectrosocopie, par exemple dans un interféromètre de Michelson balayable (13, 14, 15) associé à un détecteur (16). La détection par l'interféromètre permet d'identifier les dispositifs M1 à Mn qui sont soumis à des contraintes. Le même type de dispositif peut être utilisé pour détecter simultanément les contraintes et/ou les températures.

L'invention s'appplique notamment à la surveillance de toute installation dans laquelle des contraintes sont à détecter.

FIG.5

# CAPTEUR A FIBRE OPTIQUE

L'invention concerne un capteur à fibre optique, notamment un capteur de contraintes utilisant des fibres optiques et la propriété de celles-ci d'avoir une biréfringence intrinsèque. Plus particulièrement elle concerne un capteur de contraintes mécaniques et un détecteur thermique. Une fibre optique biréfringente peut être utilisée de deux manières principales :
- Maintien d'un état de polarisation donné (propagation de l'onde suivant un axe propre) ;
- Polarimètre (propagation différentielle suivant les deux axes de polarisation).
Le système de l'invention applique ces modes d'utilisation.
Selon l'invention, un capteur à fibre optique est caractérisé en ce qu'il comporte :
- une source optique à large bande, type diode super-luminescente par exemple, polarisée linéairement, qui peut être modulée en impulsions,
- une fibre optique capteur, monomode et biréfringente dont la face d'entrée est couplée à la source, l'axe de polarisation de la source étant aligné avec un axe neutre de la fibre,
- au moins un dispositif créateur de point couplage de polarisation placé sur la fibre optique et qui, soumis à une contrainte, crée dans la fibre un point de couplage,
- des moyens de polarisation couplés à la face de sortie de la fibre, pour aligner les polarisations des ondes transmises par la fibre, (et rendre possible leur interférence),
- un dispositif d'analyse par spectroscopie couplé à la sortie des moyens de polarisation, pour analyser le rayonnement transmis et former la fonction de transmission du capteur,
- et des moyens de traitement qui à partir de la fonction de transmission extraient la mesure de contrainte correspondant au point de couplage.
L'invention sera mieux comprise et d'autres caractéristiques apparaîtront à l'aide de la description qui suit et des figures annexées.
- la figure 1 est un schéma illustrant le fonctionnement d'une fibre optique biréfringente en tant qu'interféromètre ;
- la figure 2 représente la loi de transmission en fonction de l'inverse de la longueur d'onde d'un tel interféromètre ;
- la figure 3 représente le spectre d'une source large et la loi de transmission, en fonction de l'inverse de la longueur d'onde, de l'interféromètre ;
- la figure 4 illustre les trains d'onde en sortie du polariseur placé en sortie d'une fibre capteur biréfringente comportant plusieurs points de couplage ;
- la figure 5 représente un premier mode de réalisation du capteur selon l'invention ;
- la figure 6 représente un second mode de réalisation du capteur selon l'invention ;
- les figures 7a et 7b représentent un exemple de réalisation de transducteurs selon l'invention.
- La figure 8 représente un capteur selon l'invention permettant de détecter à la fois des contraintes mécaniques et des variations de températures.
Une fibre biréfringente à maintien de polarisation a deux axes de polarisation orthogonaux correspondant aux modes propres de la fibre. Lorsqu'un point de couplage est créé sur la fibre il y a transfert d'une fraction de l'énergie d'un axe vers l'autre. A partir du point de couplage, la fibre optique se comporte en polarimètre. Un déphasage entre les deux ondes de polarisation orthogonales est alors accumulé le long du parcours de la lumière. Ce déphasage est proportionnel à la biréfringence de la fibre.
Un couplage d'énergie de $10^{-3}$ est détectable compte tenu du fait que la visibilité d'un système de franges d'interférence est fonction des amplitudes des ondes. On gagne

donc en sensibilité, puisqu'en amplitude le rapport est $\sqrt{10^{-3}}$

soit $3.10^{-2}$.
Cet effet est donc extrêmement sensible et peut être mesuré dans un montage interférométrique.

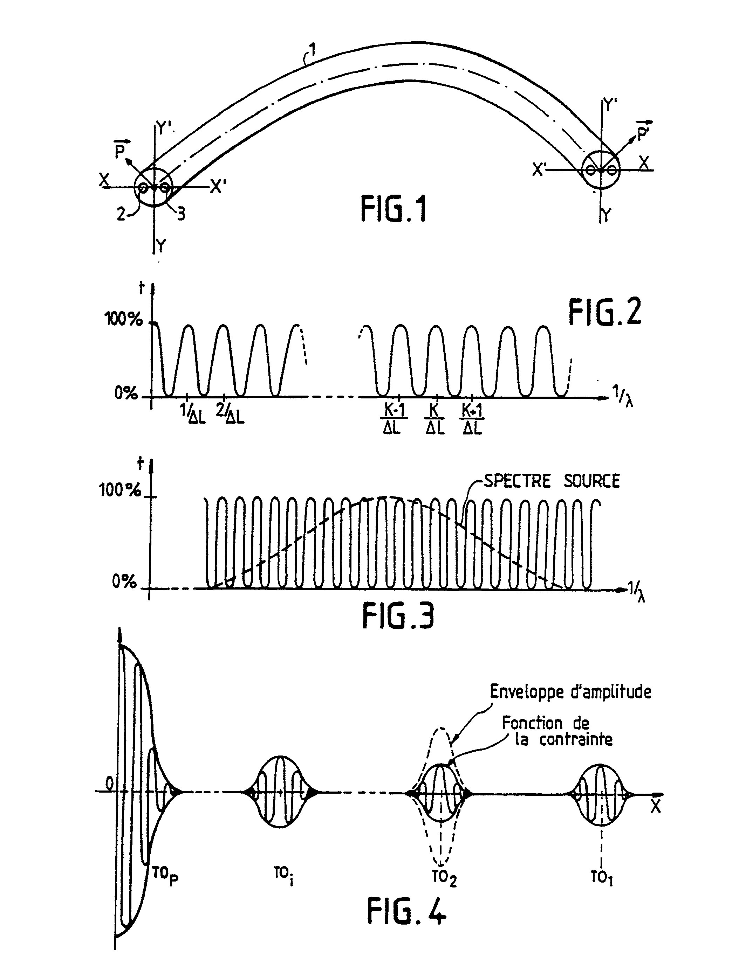

Sur la figure 1 on a représenté une fibre optique monomode à conservation de polarisation 1, pour laquelle la biréfringence est obtenue grâce à deux "barreaux" de contrainte 2, 3 fortement dopés qui déterminent les directions des deux axes neutres XX' et YY' de la fibre. Lorsqu'une telle fibre reçoit un rayonnement polarisé selon une direction P, à 45° des axes neutres de la fibre, qui se répartit donc également entre un mode lent et un mode rapide correspondant aux deux axes neutres, la propagation des deux ondes se fait à des vitesses différentes du fait de la biréfringence. En sortie de la fibre les deux modes peuvent être recombinés au moyen d'un polariseur à 45° des axes neutres, suivant P.
Dans un tel montage, comme dans un interféromètre classique à deux chemins distincts, la puissance de sortie du rayonnement varie en fonction du cosinus du déphasage entre les deux modes.

Ce système a également des propriétés de filtrage chromatique. En effet, s'il n'y avait pas de dispersion, la biréfringence créerait une différence de chemin optique $\Delta I$ entre les deux modes propres, la lumière est transmise si $\Delta I = K\lambda$ et éteinte si $\Delta I = (2k + 1) \lambda/2$, où $\lambda$ est la longueur d'onde du rayonnement optique. La loi de transmission correspondante en fonction de $1/\lambda$ est représentée sur la figure 2.

Lorsque la biréfringence varie, la loi de transmission se décale : si le système est analysé avec une raie monochromatique de longueur d'onde $\lambda_0$ on retrouve le résultat selon lequel en faisant varier la biréfringence, la transmission à une longueur d'onde donnée $\lambda_0$ varie selon une loi sinusoïdale.

Si au lieu d'une source monochromatique, la source est à spectre large, les cannelures de la fonction de transmission seront beaucoup plus resserrées. A la sortie on obtient donc le produit de la loi de transmission cannelée par le spectre de la source, c'est-à-dire un spectre cannelé qui peut être analysé par toutes les méthodes classiques de spectroscopie : prisme dispersif, réseau, spectroscopie par transformée de Fourier, etc... Le spectre d'une source large bande et la loi de transmission cannelée sont représentés sur la figure 3, en fonction de $1/\lambda$.

La spectroscopie par transformée de Fourier en particulier utilise un interféromètre dont on fait varier la différence de marche : on retrouve un signal quand le décalage entre les deux bras de l'interféromètre correspond au pas des cannelures (dans l'espace des fréquences) c'est-à-dire quand ce décalage compense celui du premier interféromètre dont on analyse la fonction de transmission.

Du point de vue de l'analyse, placer deux interféromètres de décalages similaires revient à mettre en série deux filtres ayant des pas de cannelures identiques. Une petite variation du déphasage dans l'un ou l'autre des interféromètres décale la position relative des cannelures : quand elles sont en coïncidence la lumière passe, mais on a un minimum de transmission, quand elles sont en anti-coïncidence.

Le capteur de contraintes selon l'invention utilise une telle source à spectre large, polarisée linéairement, et modulée en impulsions couplée à une fibre monomode biréfringente, selon l'axe de biréfringence.

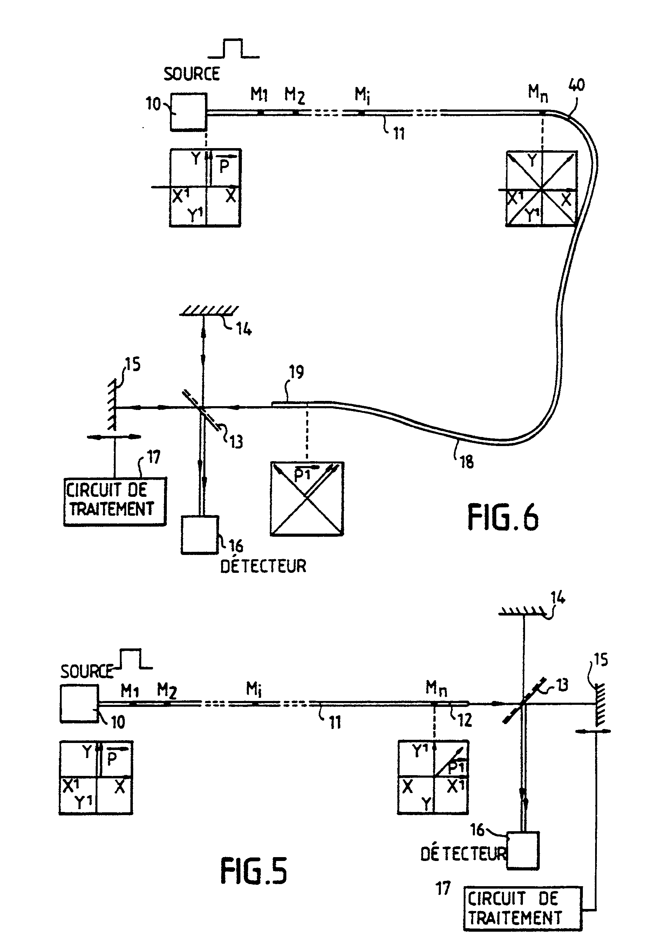

Selon l'exemple de réalisation de la figure 5, plusieurs dispositifs ou transducteurs M1, M2,... Mn sont placés sur la fibre optique 18, mais il est à noter que le système fonctionnerait également avec un seul de ces dispositifs. Ces transducteurs M1, M2,... Mn sont des dispositifs qui, sollicités par des contraintes, telles que des contraintes de pression, torsion, flexion, tension, cisaillement créent des points de couplage dans la fibre optique 11.

Les transducteurs M1, M2,...Mn sont répartis le long de la fibre en des points de mesure déterminés et leur position est donc connue du système.

Si la lumière entre dans la fibre sous la forme d'un train d'onde couplé dans le mode rapide et que des contraintes sont appliquées à un ou plusieurs transducteurs, on aura en sortie de la fibre, d'une part, un train d'onde resté dans le mode rapide et, d'autre part, un ou plusieurs trains d'onde dans le mode lent résultant chacun d'un couplage créé par un transducteur auquel est appliquée une contrainte.

Compte tenu du fait que les transducteurs non sollicités ne créent pas de point de couplage (par construction) on peut envisager de répartir sur la fibre un nombre quelconque de capteurs, limité en pratique par les dimensions du transducteur. Le système fonctionnera correctement tant que le nombre de points de couplage apparaissant sera inférieur à N, N dépendant de la proportion Pi de lumière susceptible d'être couplée par chaque transducteur Pi en activité. La quantité de lumière maximale Pmax pouvant être couplée par chaque transducteur pour l'effet à mesurer, est calculée en fonction de la valeur désirée pour N. Par exemple N est de l'ordre de 1/Pmax.

Un polariseur à 45° des axes neutres placé en sortie de la fibre permet de réaligner dans le même état de polarisation le train d'onde principale $TO_p$ et les trains d'onde couplés aux points M1, M2,... Mn respectivement $TO_1, TO_2,...TO_n$. La figure 4 représente ces trains d'onde successivement détectés en fonction du déplacement x d'un interféromètre balayable. Le décalage entre le train d'onde principal $TO_p$ et un train d'onde couplé, soit $TO_1$, est fonction de la biréfringence entre le point de couplage M1 et l'extrémité de la fibre.

L'application d'une contrainte au niveau d'un des points de mesure M1, M2,...Mn entraîne l'apparition d'un système de franges d'interférences résultant du train d'onde principal $TO_p$ et d'un train d'onde $TO_1, TO_2,...TO_n$.

Le numéro d'ordre 1...n du point de couplage est déterminé en fonction du déphasage connu appliqué à l'interféromètre de lecture par définition (principe de compensation) et l'amplitude de la contrainte exercée est proportionnelle à l'amplitude du système de frange.

Une méthode d'analyse par spectroscopie bien adaptée à ce cas est l'utilisation d'un interféromètre de Michelson, balayable. Ceci constitue évidemment un exemple de système de lecture et ne constitue pas le point principal de l'invention. Un autre système de lecture interférométrique ne modifie pas la nature de l'invention.

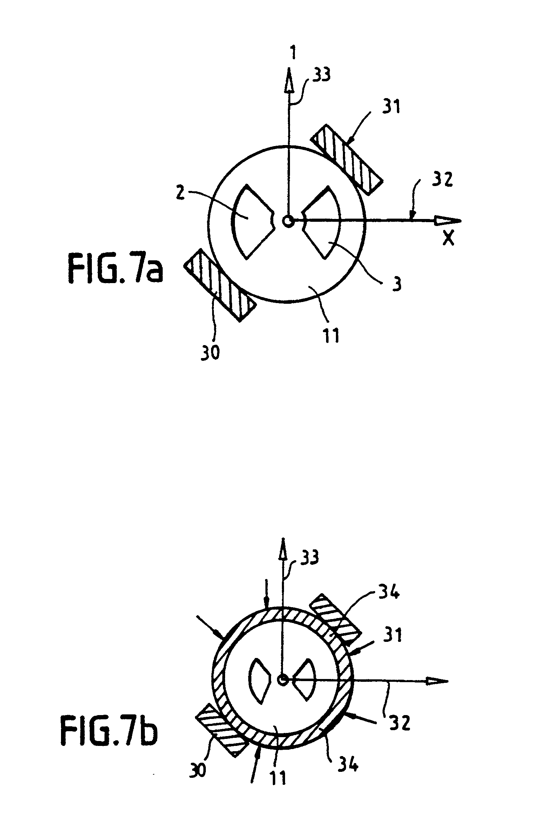

Pour réaliser les transducteurs créateurs de points de couplage, une méthode intéressante consiste à placer sur la fibre optique des dispositifs transducteurs dont le rôle est de transformer la contrainte mécanique en contrainte élasto-optique au niveau du coeur de la fibre. Par exemple et à titre non limitatif on utilise des

3

micromâchoires placées à 45° des plans de symétrie de la fibre pour créer un point de couplage localisé. Un exemple d'un tel transducteur est illustré sur la Figure 7a. Sur cette figure on voit les barreaux de contraintes 2 et 3 situés dans la fibre 11 qui déterminent les axes neutres de polarisation 32 et 33. Des pièces de pression 30 et 31 sont situées selon une direction faisant un angle de 45° avec les axes 32 et 33. Elles sont placées sur la périphérie de la fibre de façon à pouvoir exercer, sous l'effet de forces extérieures, une pression sur la fibre 11. La géométrie et l'encombrement de ces dispositifs peuvent être réduits à quelques millimètres cubes et enrobés dans un matériau de même nature ou compatible avec celui initialement prévu pour protéger la fibre optique (revêtement primaire ou coating, revêtement secondaire ou jacket, surmoulage).

La forme, la nature et la position des pièces peuvent être différentes. Il suffit que ces pièces induisent un couplage d'énergie entre les deux modes propres.

La figure 7b représente un transducteur comportant un manchon qui entoure la fibre. Les forces extérieures (F1 à Fm) impliquent des contraintes transmisent à la fibre par l'intermédiaire du manchon. Le manchon est en matériau qui permet de transmettre, voire d'amplifier, les contraintes. Le matériau utilisé peut être par exemple l'époxy-acrylate ou matériau à fort module Young.

Sur la figure 5, la source à spectre large 10 du type diode super-luminescente, polarisée linéairement par construction ou associée à un polariseur, est couplée, selon un axe de biréfringence, l'axe rapide par exemple à la fibre optique biréfringente 11 comportant un certain nombre de points de couplage faible, localisés, $M_1$, $M_2$...$M_i$... Un polariseur 12 est couplé à la sortie de la fibre à 45° des axes neutres de cette fibre, pour aligner les trains d'onde. La lumière issue de ce polariseur est alors transmise à un interféromètre de Michelson balayable comportant un élément séparateur 13 et deux miroirs de renvoi 14 et 15 recevant respectivement les ondes transmises et réfléchies par le séparateur. L'un des miroirs 15 est déplaçable le long de l'axe optique du faisceau qu'il reçoit, et ce déplacement permet de faire apparaître sur un détecteur 16 des maximum de la fonction de transmission dont l'espacement est lié au numéro d'onde du point capteur où est exercée une contrainte comme indiqué précédemment.

La visibilité du point de couplage généré au niveau du dispositif d'ordre i est liée à la contrainte qui lui est appliquée.

L'invention n'est pas limitée au mode de réalisation décrit ci-dessus. En particulier, il peut être intéressant d'éloigner la fibre capteur des moyens de détection et de mesure plutôt que de les placer en sortie de la fibre capteur. Pour cela, comme représenté sur la figure 6 où les mêmes éléments ont été désignés par les mêmes références, on connecte à la face de la sortie 40 de la fibre capteur 11 une fibre à conservation de polarisation 18 d'axe à 45° des axes neutres de la fibre capteur, et on place un polariseur 19 à l'extrémité de cette fibre de renvoi, aligné sur les axes neutres de la fibre à conservation de polarisation, l'ensemble formé par la fibre 18 et la polariseur 19 étant équivalent au polariseur 12 de la figure 5. Ce mode de réalisation permet de déporter la partie capteur fibre 11 des moyens de détection et de mesure.

Par ailleurs la source à spectre large peut être soit une diode super-luminescente dite "DSL" comme indiqué ci-dessus, soit une source laser dans laquelle on élargit le spectre artificiellement.

L'invention n'est pas limitée aux modes de réalisation précisément décrits. Notamment les points de couplage pourraient être créés par d'autres méthodes pour autant qu'ils soient créés à des points fixes, bien localisés et qu'ils ne détruisent pas la continuité du coeur de cette fibre.

Suivant un autre mode de réalisation de l'invention, on combine au capteur précédemment décrit des moyens de mesure de température tels que décrits dans la demande de brevet français n° 88 00780 comme cela a été décrit précédemment.

Une fibre monomode à conservations de polarisation linéaire est obtenue en créant une forte biréfringence élasto-optique à partir d'une zone créant des contraintes intrinsèques, dans une fibre monomode. Un exemple classique de telle fibre a la structure suivantes : deux barreaux extrêmement dopés sont placés de chaque côté du coeur. Au fibrage, les différents verres sont d'abord visqueux puis se solidifient. En se refroidissant jusqu'à la température ambiante les barreaux dopés qui ont un coefficient de dilatation thermique bien supérieur à celui du reste de la structure, se contractent et placent donc la région du coeur en contrainte d'extension. Par effet élasto-optique cette contrainte crée de la biréfringence.

Cette biréfringence est souvent définie par la longueur de battement $L_B$, c'est-à-dire la longueur au bout de laquelle les polarisations suivant les deux axes neutres de la fibre, ortohogonales, se dont déphasées de $2\pi$Rad. Cette longueur est typiquement de l'ordre de 1 à 5 mm. L'origine de cette contrainte est donc le refroidissement de la structure inhomogène et dépend de la température. Cette dépendance est de l'ordre de $10^{-3}/°C$.

Le capteur à fibre optique selon l'invention utilise cette propriété de variation de la biréfringence en fonction de la température pour permettre la mesure de température.

Pour la mesure de la température des points de couplages contrôlés sont réalisés par torsion locale de la fibre. Il suffit alors de la chauffer localement au moyen d'un arc électrique, d'une chalumeau, ou d'une source laser... La torsion se relache au point de chauffe, créant ainsi une rotation des axes neutres et donc un couplage localisé, sans pour autant induire de pertes puisque le coeur de la fibre n'est pas interrompu.

Un capteur élémentaire de température est alors le segment de fibre séparé par deux points de couplage adjacents.

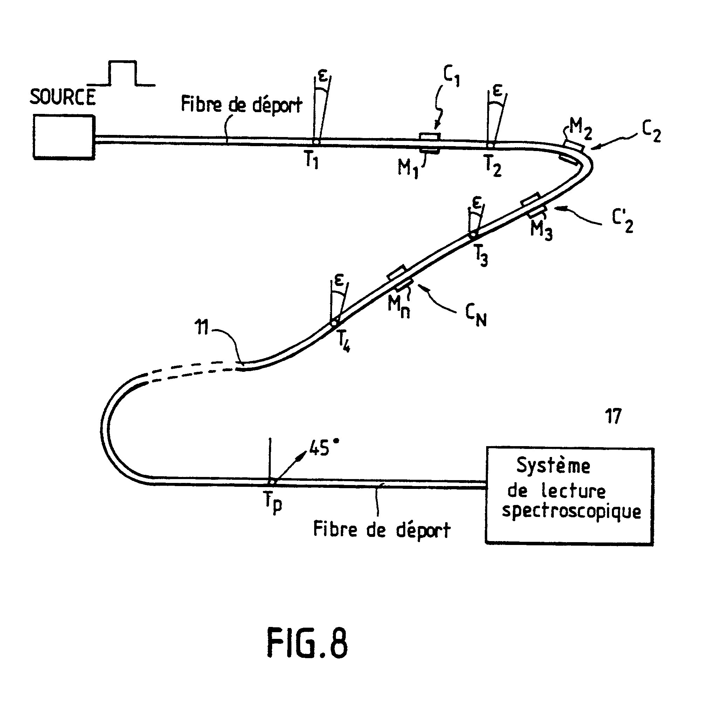

La figure 8 représente un tel capteur. Il comporte une fibre optique 11 munie de points de couplage faibles T1 à Tp et situés en des endroits fixes. Un segment de fibre compris entre deux points de couplage tels que T1 et T2 détermine donc un capteur de température.

En fonctionnement en température de référence, en température ambiante par exemple, le système de détection 17 (ou système de lecture spectroscopique) reçoit des trains d'ondes tels qu'il détecte les points de couplage T1 à Tp aux endroits prévus à l'avance tels qu'ils ont été prévus par construction. Lorsqu'un segment de fibre s'échauffe, la variation de la biréfringence conduit à un déplacement apparent des points de couplage qui délimitent ce segment de fibre ce qui permet de déterminer la variation de température.

La fibre optique 11 est également munie de capteurs (transducteurs) de contrainte M1 à Mn tels que décrits précédemment. Ces capteurs de contrainte M1 à Mn induisent des points de couplage de positions fixes pour le système de détection 17 mais d'intensité variable ce qui est le contraire du système de détection de température.

Selon l'invention, le capteur de contraintes et de température est alors constitué d'une unique fibre optique qui comporte d'une part une série de dispositifs tansducteurs dédiés aux contraintes à mesurer, ces dispositifs induisent des points de couplage d'intensité variable et ont des positions prédéterminées, et d'autre part une seconde série de points de couplages "d'intensité fixes", non soumis aux contraintes, servant à délimiter les tronçons de fibres dédiés à la mesure de la température.

Les points de couplages "fixes" en intensité peuvent être utilisés comme calibration pour déterminer le rapport en amplitude (en visibilité) des systèmes de franges propres aux contraintes.

Le dispositif de l'invention trouve particulièrement des applications dans les domaines suivants pour surveiller le comportement de matériels ou installations à diverses sollicitations :
- constructions industrielles en béton par exemple ou en matériau composite,
- surveillance d'ouvrages d'art (port, barrages...)
- aviation, déformation de structure.

Il est bien évident que la description qui précède n'a été faite qu'à titre d'exemple. Les exemples numériques et les matériaux utilisés n'ont été fournis que pour illustrer la description.

## Revendications

1. Capteur à fibre optique, caractérisé en ce qu'il comporte :
   - une source optique à large bande (10), type diode super-luminescente, polarisée linéairement, modulée en impulsions,
   - une fibre optique capteur (11), monomode et biréfringente dont la face d'entrée est couplée à la source, l'axe de polarisation de la source étant aligné avec un axe neutre de la fibre,
   - au moins un dispositif (M1 à Mn) créateur de point de couplage de polarisation placé sur la fibre optique et qui, soumis à une contrainte, crée dans la fibre un point de couplage ;
   - des moyens de polarisation (12) couplés à la face de sortie de la fibre, pour aligner les polarisations des ondes transmises par la fibre,
   - un dispositif d'analyse par spectrosocopie (13, 14, 15, 16) couplé à la sortie des moyens de polarisation, pour analyser le rayonnement transmis et former la fonction de transmission du capteur ;
   - et des moyens de traitement qui à partir de la fonction de transmission extraient la mesure de contrainte correspondant au point de couplage.

2. Capteur selon la revendication 1, caractérisé par le fait qu'il comporte plusieurs dispositifs créateurs (M1 à Mn) de points de couplage, la position de chacun de ces dispositifs sur la fibre étant connue par les moyens de traitement, ces dispositifs ne créant pas de point de couplage en l'absence de contrainte extérieure, cela permet d'en placer un grand nombre sur la fibre.

3. Capteur selon la revendication 1, caractérisé en ce que les moyens de polarisation sont constitués d'un polariseur (12) à fibre, directement couplé à la fibre capteur d'axe orienté à 45° des axes neutres de la fibre capteur.

4. Capteur selon la revendication 1, caractérisé en ce que les moyens de polarisation comportent une fibre optique à conservation de polarisation (18) couplée à la face de sortie de la fibre capteur (11), ses axes neutres étant orientés à 45° des axes de biréfringence de la fibre capteur, et un polariseur de sortie (19), couplé à la fibre à conservation de polarisation, d'axe confondu avec un axe neutre de cette fibre.

5. Capteur selon la revendication 1, caractérisé par le fait que le dispositif (M1 à Mn) créateur de point de couplage est susceptible d'exercer une pression sur la fibre (11) selon un diamètre de la fibre orienté à 45° par rapport à l'axe neutre de la fibre.

6. Capteur selon la revendication 4, caractérisé par le fait que le disposition (m1 à Mn) comporte une mâchoire (30, 31) pouvant de refermer sur la fibre en deux points diamétralement opposés.

7. Capteur selon la revendication 1, caractérisé par le fait que la fibre comporte une gaine en matériau transmetteur, voire amplificateur de contrainte pour réaliser la fraction des dispositifs (M1 à Mn) créateur de point de couplage sur la fibre (11).

8. Capteur selon la revendication 1, caractérisé par le fait qu'il comporte une fibre à conservation de polarisation (18) couplée en série avec la fibre biréfringente (11).

9. Capteur selon la revendication 1, caractérisé par le fait que la fibre optique (11) est également munie de points de couplage (T1...Tn) faibles, localisés et espacés le long de la fibre et que les moyens de traitement extraient à partir de la fonction de transmission, des mesures de températures des segments de fibre situés entre les points de couplage (T1...Tn) faibles localisés.

10. Capteur selon la revendication 8, caractérisé en ce que les points de couplage localisés sont créés sur la fibre par torsion élastique puis chauffage local qui relâche la torsion.

11. Capteur selon la revendication 1, caractérisé en ce que le dispositif d'analyse par spectroscopie est un interféromètre de Michelson dont un miroir de renvoi (16) est déplaçable le long de l'axe optique de rayonnement qu'il reçoit.

12. Capteur selon la revendication 8, caractérisé en ce que les point se couplage sont régulièrement espacés sur la fibre capteur (11).

FIG.1

FIG.2

FIG.3

SPECTRE SOURCE

Enveloppe d'amplitude

Fonction de
la contrainte

$TO_P$

$TO_i$

$TO_2$

$TO_1$

FIG.4

FIG.6

FIG.5

8

FIG.7a

FIG.7b

FIG.8

EP 0 434 504 A1

**Office européen des brevets**

# RAPPORT DE RECHERCHE EUROPEENNE

Numero de la demande

EP 90 40 3544

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-326475 (THOMSON-CSF) * revendication 1; figures 5, 6 * | 1 | G01D5/26 G01L1/24 |
| A | * revendications 1-6; figures * | 1-5, 8-12 | |
| D,A | & FR-A-2626367 | | |
| Y | EP-A-257959 (A.J.ROGERS) * page 3, lignes 13 - 15; revendications 1, 5, 6 * | 1 | |
| A | EP-A-338902 (THOMSON-CSF) * abrégé; revendication 7 * | 1, 11 | |
| A | GB-A-2189880 (PLESSEY) * abrégé; figure 1 * | 1 | |
| A | EP-A-144509 (POLAROID) * revendication 11 * | 7 | |

**DOMAINES TECHNIQUES RECHERCHES (Int. Cl.5)**

G01D
G01L

Le présent rapport a été établi pour toutes les revendications

| Lieu de la recherche | Date d'achèvement de la recherche | Examinateur |
|---|---|---|
| BERLIN | 12 FEVRIER 1991 | FUCHS R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

11